Europäisches Patentamt

European Patent Office

Office européen des brevets

(11) Publication number: **0 264 573**
**B1**

(12) **EUROPEAN PATENT SPECIFICATION**

(45) Date of publication of the patent specification:
07.11.90

(21) Application number: 87112085.3

(22) Date of filing: 20.08.87

(51) Int. Cl.⁵: **F16F 9/04**

(54) Air spring having internal sealing band and method of installing same.

(30) Priority: 24.09.86 US 910715

(43) Date of publication of application:
27.04.88 Bulletin 88/17

(45) Publication of the grant of the patent:
07.11.90 Bulletin 90/45

(84) Designated Contracting States:
DE ES FR GB IT

(56) References cited:
DE-A- 2 842 555
FR-A- 1 218 300
US-A- 3 527 451

(73) Proprietor: THE FIRESTONE TIRE & RUBBER
COMPANY, 1200 Firestone Parkway, Akron,
Ohio 44317(US)

(72) Inventor: Geno, Wayne H., 106 Royal Pine Lane, Cicero
Indiana 46034(US)
Inventor: Weitzenhof, David A., 1590 Orchard Drive,
Akron Ohio 44210(US)

(74) Representative: von Raffay, Vincenz, Dipl.-Ing. et al,
Patentanwälte Raffay, Fleck & Partner
Postfach 32 32 17, D-2000 Hamburg 13(DE)

## Description

The invention relates to an air spring for vehicles according to the preamble of claim 1 and to the method of sealing one end of a flexible sleeve of said air spring in the open end of a generally cylindric wall of an end member with an internal continous sealing band.

Such an air spring has been known from the teachings of the FR-A 1 218 300.

U.S. Patent No. 3 527 451 shows a shock absorber which has an internal band which clamps the flexible sleeve against the inner surface of an outer cylindrical housing. It is believed that the internal clamping is achieved either by a wedging action of the internal clamping band against the trapped flexible sleeve end or by a permanent deformation of the internal clamping band in a similar manner as the crimping of a sealing band on the exterior of the flexible sleeve as used in many prior external clamping band arrangements.

Therefore, the need has existed for an improved air spring and method of making the same which contains an internal sealing band for sealingly securing the flexible sleeve against an end cap and/or piston member of the air spring.

## DISCLOSURE OF THE INVENTION

An objective of the invention is to provide an air spring in which the material of the flexible sleeve is compressed between the internal sealing band and the annular sealing surface on the interior of the end cap wall when in a clamped at rest condition. A further objective is to provide such an improved air spring in which the sealing band has an outer diameter smaller than the internal diameter of the recessed sealing surface formed on the cylindrical wall of the end cap when the end cap is formed of metal, to form an annular space therebetween which space has a radial dimension less than the thickness of the flexible sleeve to insure that the sleeve is compressed when installed between the sealing band and end wall of the end cap member.

Another objective of the invention is to provide such an improved air spring in which the end cap member can be formed of plastic, preferably a glassfiber reinforced high strength plastic material, which is expanded outwardly within its elastic limit upon insertion of the sealing band and flexible sleeve end into the open end thereof, whereupon the elasticity of the plastic material upon attempting to return the stressed end wall to its unstressed position, will clamp the flexible material of the sleeve against the internal sealing band. A still further objective is to provide such an improved air spring in which an annular lip is provided within the open end of the end cap member adjacent the sealing surface to assist in retaining and restricting movement of the compressed flexible sleeve material therefrom.

A still further objective of the invention is to provide an improved method for simply and economically installing an internal sealing band within the open end of an end cap member by the use of a press plate which inserts the sealing band and rolled end of the flexible sleeve into the open end of the end cap by compressing the rolled end portion of the elastomeric sleeve and stressing or expanding outwardly the open end of the end cap wall without permanently deforming the end cap or internal sealing band.

A further objective of the invention is to provide such an improved air spring having an internal sealing band and a method of installing the same which may reduce the number of parts heretofore required in the assembly of such an air spring of the type having an external clamping band, which will save space in certain installations by eliminating the exterior sealing band, and in which the end cap member can be formed either of plastic or metal without affecting the results achieved thereby. These objectives and advantages are obtained by the air spring of the invention, as characterized in claim 1.

These objectives and advantages are further obtained by the method of the invention according to claim 15.

## BRIEF DESCRIPTION OF THE DRAWINGS

A preferred embodiment of the invention illustrative of the best mode in. which applicants have contemplated applying the principles, is set forth in the following description and is shown in the drawings, and is particularly and distinctly pointed out and set forth in the appended claims.

FIG. 1 is an elevational view of the improved air spring in a static or at-rest position;

FIG. 2 is a longitudinal sectional view of the improved air spring shown in FIG. 1;

FIG. 3 is a fragmentary diagrammatic sectional view showing one step of the improved method for installing the internal sealing band within the end cap of the air spring of FIGS. 1 and 2;

FIG. 4 is an enlarged fragmentary sectional view of the sealing band in full lines prior to being installed within the open end of the end cap, and of the sealing band in phantom lines installed within the open end of the end cap;

FIG. 5 is a fragmentary sectional view similar to FIG. 4 showing a further step of the improved installation method from that of FIG. 4 wherein the rolled end of the flexible sleeve is being compressed within the open end of a metal end cap;

FIG. 6 is an enlarged fragmentary sectional view showing the next step of the improved method after that of FIG. 5 in which the installation press plate has been removed and the sealing band securing the rolled end of the flexible sleeve within the open end of the end cap;

FIG. 7 is an enlarged sectional view taken on line 7-7, FIG. 2;

FIG. 8 is a perspective view of the sealing band;

FIG. 9 is a diagrammatic sectional view similar to FIG. 3 showing the start of the installation of the sealing band in the open end of a plastic end cap member; and

FIGS. 10, 11 and 12 are enlarged diagrammatic sectional views similar to FIGS. 4, 5 and 6, showing the method of installing the sealing band within the open end of a plastic end cap.

Similar numerals refer to similar parts throughout the drawings.

BEST MODE FOR CARRYING OUT THE INVENTION

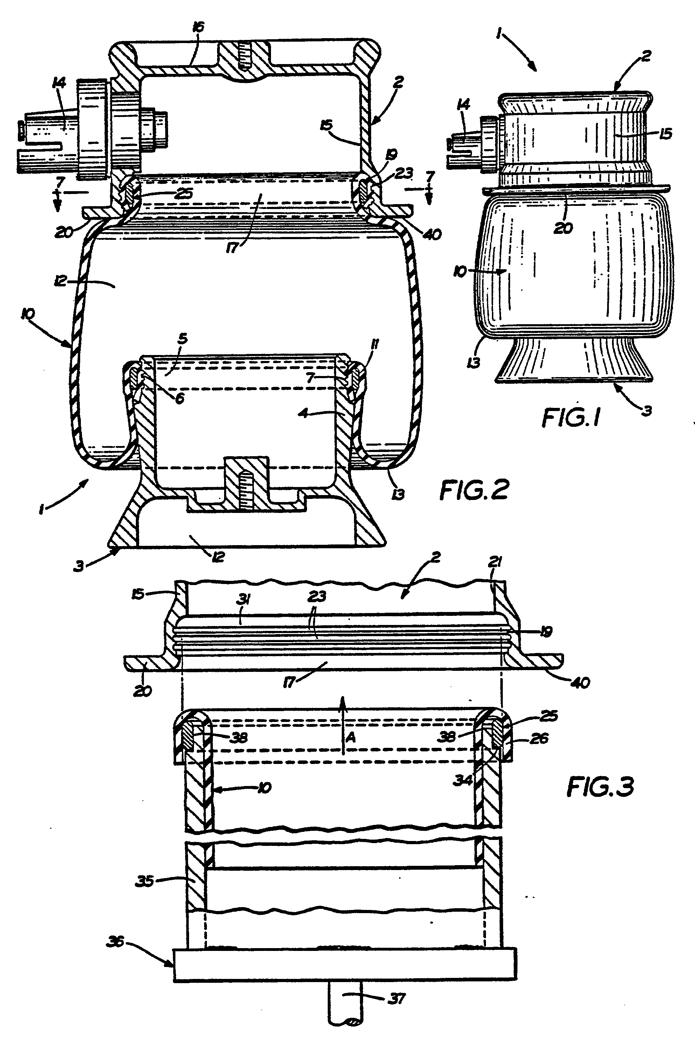

The improved air spring of the invention is indicated generally at 1, and is shown in an at-rest position in FIGS. 1 and 2. Air spring 1 includes an end cap member and an opposed pistion member, indicated generally at 2 and 3, respectively. Piston member 3 has a generallz cylindrical side wall 4 terminating in an upper open and 5 and having an exterior annular clamping surface 6 formed with a plurality of grooves 7.

One end of a flexible sleeve indicated generally at 10, is sealingly clamped in a generally air tight relationship against surface 6 by an exterior annular sealing band 11 which is compredded and crimped to seal the sleeve end against clamping surface 6 in a manner well known in the air spring art. Piston member 3 further includes a closed mounting end 12 for attaching the air spring on a portion of a vehicle (not shown) in a marner known to those skilled in the air spring art. The particular configuration and arrangement of piston member 3 may vary without affecting the concept of the invention.

Flexible sleeve 10 has a generally cylindrical configuration and is formed of an elastomeric material generally containing internal reinforcing fabric (not shown) which is trapped within one or two plys of an elastomer, also well known in the air spring art. Preferably at-least one end portion of flexible sleeve 10 indicated by numeral 13, is in a rolled state when in an at-rest position to permit piston member 3 to move axially away form end cap 2 without damaging sleeve 10.

End cap 2 is provided with a solenoid control valve 14 for regulating the fluid pressure within the air spring and forms no particular part of the present invention.

End cap 2 has a cup-shaped configuration with a cylindrical side wall 15 terminating in a closed end wall 16 and an open end 17 which communicates with the interior 12 of flexible sleeve 10. Sleeve interior 12 provides the compressed fluid chamber for air spring 1.

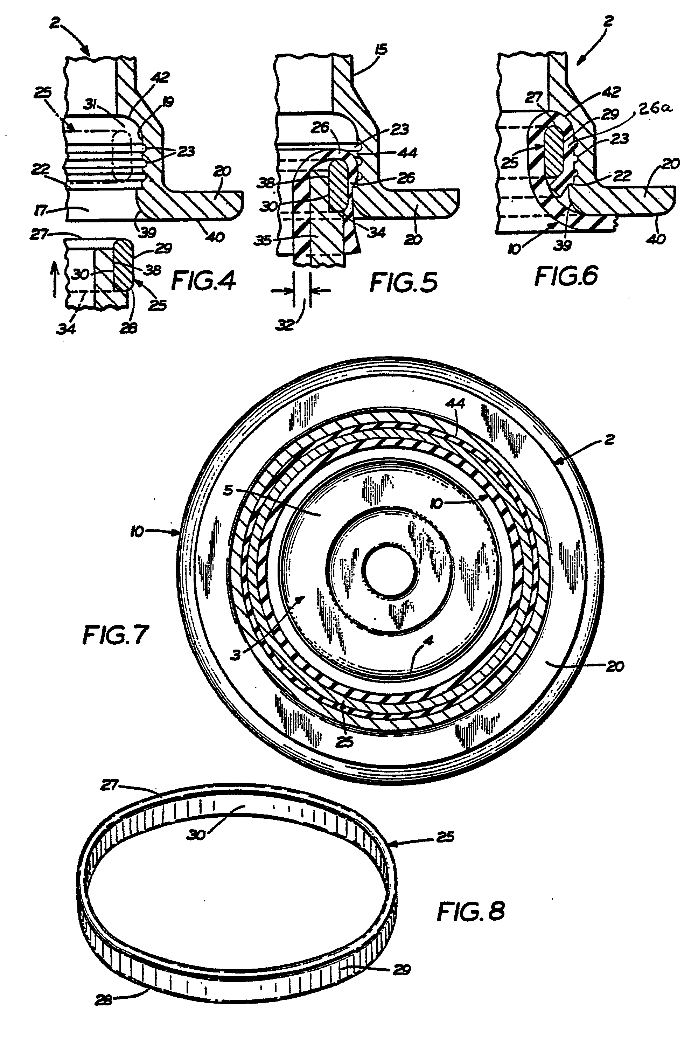

In accordance with one of the features of the invention, an annular sealing surface 19 (FIG. 4) is formed on the inner surface 20 of side wall 15 adjacent open end 17 thereof and has a recessed configuration. Open end 17 of wall 15 is defined by a radially outwardly extending flange 20 which adds strength to the open end of the end cap and provides for a smooth surface about which the flexible sleeve may extend as shown in FIG. 6. Flange 20 is connected to recessed sealing surface 19 by an annular lip 22 which assists in forming the recessed configuration of sealing surface 19 and in securing a clamped end portion of sleeve 10 therein. A plurality of annular grooves 23 are formed in sealing surface 19 to further secure the clamped end of sleeve 10 therein.

An annular sealing band indicated generally at 25 (FIG. 8) is located within the open end 17 of end wall 15 and clamps a rolled end 26 of flexible sleeve 10 against and within recessed annular sealing surface 19. Sealing band 25 is a continuous preferably metal member, having rounded top and bottom surfaces 27 and 28 and generally smooth flat outer and inner circumferential surfaces 29 and 30, respectively.

In the particular embodiment shown in FIGS. 1-8, end cap 2 and in particular cylindrical wall 15 thereof, is formed of metal as is sealing band 25. The outer diameter of band 25 represented by the diameter of surface 29 will be less than the internal diameter of annular sealing surface 19 so as to form an annular space 31 therebetween which has a radial width less than the thickness of flexible sleeve 10 represented at 32 in FIG. 5. Stated differently, the outer diameter of band 25 is less than the inner diameter of annular sealing surface 19 with the difference being less than twice the thickness of the flexible sleeve material. This relationship insures that the sleeve material located in annular space 31 will be in a compressed state when trapped therein between band 25 and sealing surface 19. The relationship of band 25 and annular sealing surface 19 and rolled end 26 of sleeve 10 is shown in exaggerated condition in FIGS. 4-6 for purposes of illustration. The installed static condition of sealing band 25 and trapped sealed end 26 is shown in FIG. 6.

The improved method of the invention for installing internal sealing band 25 is shown particularly in FIGS. 3-6. Band 25 is placed on an annular stepped shoulder 34 formed at the top open end of a cylindrical wall 35 of a press plate indicated generally at 36, which plate is mounted for movement on the end of a ram 37. Step shoulder 34 has an axially extending annular wall 38, the height of which is less than the height of ring 25 with the radial length of shoulder 34 being generally less than the thickness of band 25, as shown particularly in FIGS. 4 and 5.

After placing band 25 on shoulder 34, end 26 of sleeve 10 is rolled about the band as shown in FIG. 3. Press plate 36 then is moved in the direction of arrow A moving band 25 and rolled sleeve end 26 into open end 17 of end cap 2. Upon entering end cap 2, an outer portion 26a of rolled end 26 is stretched upon passing a smooth annular curved surface 39 which joins the bottom surface 40 of flange 20 with annular lip 22 (FIG. 5). When inserting and squeezing rolled end portion 26a past and along surface 39, the thickness of the sleeve material may be compressed almost 90% of its original thickness without damaging the internal reinforcing cords. Upon passing over lip 22, as shown in FIG. 5, the elastomeric material of roller end portion 26a becomes trapped in annular space 31 against recessed annular sealing surface 19 and expands outwardly into annular grooves 23 thereof to assume a final partially compressed state as shown in FIG. 6.

In the installed position of FIG. 6, rolled end portion 26a will be compressed to within a range of 30%-60% of its original thickness which will provide a sufficiently tight seal between band 25 and sealing surface 19 to prevent the escape of compressed air therebetween. The continuous configuration of installed clamping band 25 will prevent any inward radial movement or collapsing of the band, and the strength of metal can side wall 15 will prevent any excess outward expansion of the end cap which could break the seal formed by the compressed elastomer material therebetween. Annular lip 22 formed at the lower end of sealing surface 19 in combination with curved upper surface 42 which joins sealing surface 19 with internal cylindrical surface 21 of wall 15, will assist in retaining sealing band 25 and trapped elastomer material 26a therein. It is easily seen that after insertion of band 25 and rolled end 26 of sleeve 10 within annular space 31 where rolled end portion 26a is pressed against recessed surface 19 as shown in FIG. 5, press plate 26 can be withdrawn therefrom with band 25 and rolled end 26 remaining therein.

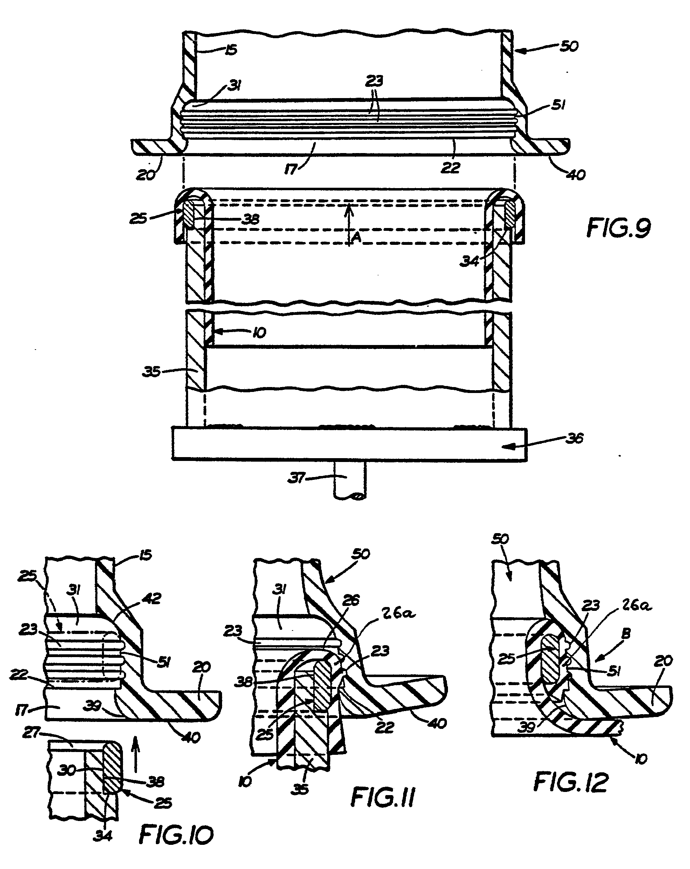

A modified embodiment of the improved air spring and method of installing the internal sealing band is shown in FIGS. 9-12 and is similar in many respects to the embodiment shown in FIGS. 1 and 8. The main difference of the second embodiment is that the end cap member indicated generally at 50, is formed of a plastic material. End cap 50 has a similar open end configuration as that of end cap 2 and includes an annular recessed sealing surface 51 similar to sealing surface 19. Referring to FIG. 10, the outer diameter of sealing band 25 will be equal to or slightly larger than the internal diameter of annular sealing surface 51 as shown in phantom lines therein. Upon inserting rolled end 26 of flexible sleeve 10 by means of press plate 36, ring 25 and rolled end 26 will expand the lower portion of end cap 50 which defines open end 17, in an outwardly direction shown in a greatly exaggerated position in FIG. 11. This outward expansion permits band 25 and end 26 to pass beyond annular lip 22 and into annular space 31 adjacent sealing surface 51. Sleeve end portion 26a will be squeezed and stretched in a similar manner as in the first embodiment as shown in FIG. 5, but to a less amount upon inserting the rolled sleeve end into the open end of the end cap.

Upon removal of press plate 36, the outwardly expanded lower end of cap member 50 will move inwardly in the direction of arrow B (FIG. 12) securely clamping trapped sleeve portion 26a between band 25 and sealing surface 51 in a similar manner as discussed above with respect to FIG. 6. In this second embodiment, the thickness of the clamped material also is compressed to within 30%-60% of its original thickness.

In accordance with one of the main features of the second embodiment, the plastic material is the lower end of end cap 50 is not expanded beyond its elastic limit so that upon removal of press plate 36 it will attempt to return to its unstressed state, which provides the clamping force for pressing the elastomeric material against the outer surface of band 25. Again, band 25 is a continuous annular ring, and it is not collapsed inwardly or expanded outwardly when installed within the open end of end cap 50. Band 25 in combination with the inward movement of the lower portion of end cap 50 will seal the elastomer material therebetween. End cap 50 preferably is formed of a high strength plastic such as a glass filled acetal resin of the type identified as Delrin 100 or 500 which is a registered trademark of E. I. DuPont de Nemours or a mineral filled thermoplastic resin such as Minlon, or a glass filled nylon resin such as Zytel 66, both of which are registered trademarks of E. I. DuPont de Nemours. These particular plastics have been found to have sufficient rigidity to prevent cracking upon insertion of the sealing band and rolled sleeve end, and have sufficient resiliency to clamp the elastomeric material against band 25.

Again, it is important in practicing the method of the invention when installing band 25 in end cap 50 to achieve the internal clamping arangement, that the plastic material of end cap 50 not be stretched beyond its elastic limit and that the outer diameter of sealing band 25 is generally equal to the internal diameter of annular sealing surface 51. It is readily apparent to one skilled in the art that by varying the types of plastic used for end cap 50 and the relationship of the diameters of sealing band 25 and clamping surface 51 that various amounts of clamping force can be achieved. It is important that the elastomeric material of sleeve 10 that is clamped between band 25 and surface 51 be compressed generally to within the range of 30%-60% of its uncompressed thickness whereupon it will flow into annular grooves 23 and provide an air tight seal.

## Claims

1. An air spring (1) for vehicles including
(a) cap means (2, 50) for mounting the air spring (1) on a vehicle, said cap means (2, 50) having a cup-like configuration with a side wall (15) terminating in an open end (17) and having an inner annular sealing surface (19) recessed in an inner surface of the side wall (15); the side wall (15) having an inwardly extending lip (22) with an inner diameter and the annular sealing surface (19) being adjacent to and outwardly of said annular lip (22);
(b) a piston member (3) adapted to be mounted on the vehicle and located in a spaced relationship from the open end (17) of the cap means (2, 50);
(c) a fluid pressure chamber formed between the cap means (2, 50) and piston member (3) by a flexible sleeve (10) sealingly connected at opposite ends thereof to the cap means (2) and piston member (3),
(d) a continuous annular sealing band (25) located within the open end (17) of the cap means (2), characterized by said band (25) having a cylindrical side wall with an outer diameter (29) being greater or less, respectively, than the inner diameter of the annular lip (22) prior being installed within the open end (17) of the cap means (2, 50) so as to be retained therein by the annular lip (22), said sealing band (25, being concentric with the recessed inner annular sealing surface (19) of said cap means (2, 50) with one end (26a) of the flexible sleeve (10) being located between the sealing band (25) and the recessed sealing surface (19) and placed in a state of compression by the sealing band (25) to form a generally air tight seal with said sealing band (25) and annular sealing surface (19), with said sealing band (25) being in a non-deformed state.

2. The air spring defined in Claim 1 in which the cylindrical side wall (15) of the cap means (2, 50) is terminating in an outwardly extending annular flange (20) at the open end (17) of said cap means (2, 50).

3. The air spring defined in Claim 2 in which the annular sealing surface (19) is joined to the annular flange by a smooth curved annular surface.

4. The air spring defined in Claim 1 in which the annular sealing surface (19) is formed with a plurality of grooves (23).

5. The air spring defined in Claim 1 in which the said one end of the flexible sleeve (10) is rolled about the sealing band (25).

6. The air spring defined in Claim 1 in which the open end of the cap means (2, 50), defined by the outwardly extending annular flange (20), is joined with the annular sealing surface (19) by the annular lip (22).

7. The air spring (1) with the inner diameter of the annular lip (22) being greater (figures 4-6) than the outer diameter (29) of the sealing band (25) as defined in Claim 1 in which the sealing band (25) and cap means are metal.

8. The air spring defined in Claim 7 in which the outer diameter of the annular sealing band (25) is less than the diameter of the annular sealing surface (19) and forms an annular space (31) therebetween; and in which the width of said annular space (31) is less than the thickness of the flexible sleeve (10).

9. The air spring defined in Claim 8 in which the portion of the flexible sleeve (10) clamped between the sealing band (25) and clamping surface is compressed to within 30%–60% of its uncompressed condition.

10. The air spring (1) with the inner diameter of the annular lip (22) being less (figures 10-12) than the outer diameter (29) of the sealing band (25) as defined in Claim 1 in which the sealing band (25) is metal and the cap means (2, 50) is plastic.

11. The air spring defined in Claim 10 in which the side wall (15) with the annular sealing surface (19) being formed thereon is formed of a glass filled nylon resin.

12. The air spring defined in Claim 11 in which the cap means (2, 50) is formed of an acetal resin.

13. The air spring defined in Claim 10 in which the outer diameter (29) of the sealing band (25) is generally equal to the diameter of the annular sealing surface (19) of the cap means (2, 50).

14. The air spring defined in Claim 13 in which said cylindrical side wall (15) is expanded outwardly by the clamped flexible sleeve (10) when clamped between the sealing band (25) and the sealing surface (19).

15. A method of sealing one end of a flexible sleeve of an air spring (1) according to claim 1 in the open end (17) of a generally cylindrical wall (15) of an end member (2, 50) with an internal continuous sealing band (25), including the steps of:

(a) providing an end member (2, 50) having a generally cylindrical wall (15) and an inner annular recessed sealing surface (19) and an inwardly extending annular lip (22) formed thereon generally adjacent an open end (17) thereof;

(b) rolling one end (26) of a flexible sleeve (10) over a continuous unstressed annular sealing band (25) having an outer diameter greater or less, respectively, than an inner diameter of the annular lip (22);

(c) inserting the rolled end (26) of the flexible sleeve (10) and sealing band (25) beyond the annular lip (22); and

(d) outwardly expanding the annular lip (22) and cylindrical wall (15) of the end member (2, 50) within their elastic limits upon inserting the rolled end (26) of the flexible sleeve (10) and sealing band (25) beyond the annular lip (22) and into the open end (17) of said end member (2, 50) placing a portion of the flexible sleeve (10) in compression between the sealing band (25) and annular recessed sealing surface (19) to clamp and seal the flexible sleeve (10) against the end member (2, 50) within the open end without deforming the sealing band (25) and without deforming the end member (2, 50) beyond its elastic limits and to retain the annular sealing band (25) within the open end (17) by the annular lip (22).

16. The method defined in Claim 15 in which the flexible sleeve (10) is compressed to within a range of 30%–60% of its uncompressed condition.

17. The method defined in Claim 16 in which the cylindrical wall (15) of the end member (2, 50) is formed of plastic or metal, respectively, and the sealing band is formed of metal.

18. The method defined in Claim 15 in which the cylindrical wall (15) terminates in an outwardly extending annular flange (20) extending about the open end of the end member (2, 50).

19. The method defined in Claim 15 in which - when the cap means (2, 50) being formed of metal – the outer diameter of the sealing band (25) is less than the diameter of the annular sealing surface (19) by an amount not greater than twice the thickness of the flexible sleeve (10).

20. The method defined in Claim 15 in which – when the cap means (2, 50) being formed of plastic – the outer diameter (29) of the sealing band (25) is generally equal to the diameter of the annular sealing surface (19) of the cap means (2, 50).

**Patentansprüche**

1. Luftfeder (1) für Fahrzeuge, einschließlich

(a) einer Kappe (2, 50) zum Befestigen der Luftfeder (1) am Fahrzeug, wobei die Kappe (2, 50) eine becherartige Gestaltung mit einer Seitenwand (15), die in einem offenen Ende (17) endet, und eine innere ringförmige Dichtungsfläche (19) besitzt, die in eine innere Fläche der Seitenwand (15) eingelassen ist; wobei die Seitenwand (15) eine sich nach innen erstreckende Lippe (22) mit einem Innendurchmesser besitzt, und wobei die ringförmige Dichtungsfläche (19) von außen an die ringförmige Lippe (22) angrenzt;

(b) eines Kolbengliedes (3), das am Fahrzeug befestigt und in beabstandeter Beziehung vom offenen Ende (17) der Kappe (2, 50) angeordnet werden kann;

(c) einer Strömungsmitteldruckkammer, die zwischen der Kappe (2, 50) und dem Kolbenglied (3) durch einen flexiblen Schlauch bzw. Hülse (10) gebildet wird und abdichtend dessen gegenüberliegende Enden mit der Kappe (2, 50) bzw. dem Kolbenglied (3) verbindet,

(d) eines kontinuierlichen, ringförmigen Dichtungsbandes (25), das innerhalb des offenen Endes (17) der Kappe (2, 50) angeordnet ist, dadurch gekennzeichnet, daß das Band (25) eine zylindrische Seitenwand mit einem Außendurchmesser (29) besitzt, der respektiv größer oder geringer als der Innendurchmesser der ringförmigen Lippe (22) ist, bevor es in das offene Ende (17) der Kappe (2, 50) eingesetzt wird, so daß es darin durch die ringförmige Lippe (22) gehalten wird, und daß das Dichtungsband (25) konzentrisch zur eingelassenen inneren ringförmigen Dichtungsfläche (19) der Kappe (2, 50) ist, wobei ein Ende (26a) des flexiblen Schlauches (10) zwischen dem Dichtungsband (25) und der eingelassenen Dichtungsfläche (19) angeordnet und in einem Zustand der Kompression durch das Dichtungsband (25) eingesetzt wird, um eine generelle luftdichte Dichtung mit dem Dichtungsband (25) und der ringförmigen Dichtungsfläche zu bilden, wobei sich das Dichtungsband (25) in einem nichtdeformierten Zustand befindet.

2. Luftfeder nach Anspruch 1, bei der die zylindrische Seitenwand (15) der Kappe (2, 50) in einem sich nach außen erstreckenden, ringförmigen Flansch (20) am offenen Ende (17) der Kappe (2, 50) endet.

3. Luftfeder nach Anspruch 2, bei der die ringförmige Dichtungsfläche (19) mit dem ringförmigen Flansch durch eine glatt abgebogene Ringfläche verbunden ist.

4. Luftfeder nach Anspruch 1, bei der die ringförmige Dichtungsfläche (19) mit einer Vielzahl von Nuten (23) versehen ist.

5. Luftfeder nach Anspruch 1, bei der das eine Ende des flexiblen Schlauches (10) um das Dichtungsband (25) herumgerollt ist.

6. Luftfeder nach Anspruch 1, bei der das offene Ende der Kappe (2, 50), das durch den sich nach außen erstreckenden ringförmigen Flansch (20) gebildet ist, mit der ringförmigen Dichtungsfläche (19) durch die ringförmige Lippe (22) verbunden ist.

7. Luftfeder (1), bei der der Innendurchmesser der ringförmigen Lippe (22) größer ist (Fig. 4 bis 6) als der Außendurchmesser (29) des Dichtungsbandes (25) nach Anspruch 1, wobei das Dichtungsband (25) und die Kappe aus Metall bestehen.

8. Luftfeder nach Anspruch 7, bei der der Außendurchmesser des ringförmigen Dichtungsbandes (25) geringer ist als der Durchmesser der ringförmigen Dichtungsfläche (19) und einen ringförmigen Raum (31) dazwischen ausbildet, und wobei die Weite des ringförmigen Raumes (31) geringer ist als die Dicke des flexiblen Schlauches (10).

9. Luftfeder nach Anspruch 8, bei der der Teil des flexiblen Schlauches (10), der zwischen dem Dichtungsband (25) und der Klemmfläche eingeklemmt ist, zwischen 30 bis 60% seines nichtkomprimierten Zustandes zusammengedrückt wird.

10. Luftfeder (1), bei der der Innendurchmesser der ringförmigen Lippe (22) geringer ist (Fig. 10 bis 12) als der Außendurchmesser (29) des Dichtungsbandes (25) nach Anspruch 1, bei der das Dichtungsband (25) aus Metall und die Kappe (2, 50) aus Kunststoff besteht.

11. Luftfeder nach Anspruch 10, bei der die Seitenwand (15) mit der ringförmigen Dichtungsfläche (19), die darauf ausgebildet ist, aus einem glasgefüllten Nylonharz besteht.

12. Luftfeder nach Anspruch 1, bei der die Kappe (2, 50) aus einem Acetalharz gebildet ist.

13. Luftfeder nach Anspruch 10, bei der der Außendurchmesser (29) des Dichtungsbandes (25) generell dem Durchmesser der ringförmigen Dichtungsfläche (19) der Kappe (2, 50) gleicht.

14. Luftfeder nach Anspruch 13, bei der sich die zylindrische Seitenwand (15) nach außen durch den eingeklemmten flexiblen Schlauch (10) ausdehnt, wenn sie zwischen dem Dichtungsband (25) und der Dichtungsfläche (19) eingeklemmt wird.

15. Verfahren zum Verschließen bzw. Abdichten eines Endes eines flexiblen Schlauches einer Luftfeder (1) gemäß Anspruch 1 in dem offenen Ende (17) einer generell zylindrischen Wand (15) eines Endgliedes (2, 50) mit einem inneren kontinuierlichen Dichtungsband (25), einschließlich folgender Stufen:

(a) Vorsehen eines Endgliedes (2, 50), das eine generell zylindrische Wand (15) und eine innere ringförmige, eingelassene Dichtungsfläche (19), sowie eine sich nach innen erstreckende ringförmige Lippe (22) besitzt, die darauf angrenzend an ein offenes Ende (17) ausgebildet ist;

(b) Umbördeln eines Endes (26) eines flexiblen Schlauches (10) über ein kontinuierlich unbelastetes, ringförmiges Dichtungsband (25), das einen Außendurchmesser besitzt, der respektiv größer oder geringer ist, als ein Innendurchmesser der ringförmigen Lippe (22);

(c) Einsetzen des umbördelten Endes (26) des flexiblen Schlauches (10) und des Dichtungsbandes (25) über die ringförmige Lippe (22) hinaus; und (d) nach außen Ausdehnen der ringförmigen Lippe (22) und der zylindrischen Wand (15) des Endgliedes (2, 50) innerhalb ihrer elastischen Grenzen nach Einsetzen des umbördelten Endes (26) des flexiblen Schlauches (10) und des Dichtungsbandes (25) über die ringförmige Lippe (22) hinaus und in das offene Ende (17) des Endgliedes (2, 50) hinein, Unterdrucksetzen eines Teils des flexiblen Schlauches (10) zwischen dem Dichtungsband (25) und der ringförmigen, eingelassenen Dichtungsfläche (19), um den flexiblen Schlauch (10) am Endglied (2, 50) einzuklemmen und innerhalb des offenen Endes abzudichten, ohne das Dichtungsband (25) zu deformieren und ohne das Endglied (2, 50) über seine elastischen Grenzen hinaus zu deformieren, und wobei das ringförmige Dichtungsband (25) innerhalb des offenen Endes (17) durch die ringförmige Lippe (22) festgehalten wird.

16. Verfahren nach Anspruch 15, bei dem der flexible Schlauch (10) innerhalb eines Bereiches von 30 bis 60% seines nicht zusammengedrückten Zustandes zusammengedrückt wird.

17. Verfahren nach Anspruch 16, bei dem die zylindrische Wand (15) des Endgliedes (2, 50) aus Kunststoff oder Metall gebildet ist, und daß das Dichtungsband aus Metall besteht.

18. Verfahren nach Anspruch 15, bei dem die zylindrische Wand (15) in einem sich nach außen erstreckenden ringförmigen Flansch (20) endet, der sich um das offene Ende des Endgliedes (2, 50) erstreckt.

19. Verfahren nach Anspruch 15, bei dem der äußere Durchmesser des Dichtungsbandes (25) — wenn die Kappe (2, 50) aus Metall besteht — geringer ist als der Durchmesser der ringförmigen Dichtungsfläche (19), nämlich in einem Ausmaß nicht größer als die zweifache Dicke des flexiblen Schlauches (10).

20. Verfahren nach Anspruch 15, bei dem der äußere Durchmesser (29) des Dichtungsbandes (25) — wenn die Kappe (2, 50) aus Kunststoff besteht — generell dem Durchmesser der ringförmigen Dichtungsfläche (19) der Kappe (2, 50) gleicht.

**Revendications**

1. Ressort pneumatique (1) pour véhicules comprenant

(a) un moyen à chapeau (2, 50) pour le montage du ressort pneumatique (1) sur un véhicule, ledit moyen à chapeau (2, 50) ayant une configuration analogue à une coupelle avec une paroi latérale (15) aboutissant dans une extrémité ouverte (17) et ayant une surface annulaire intérieure (19) d'étanchéité en retrait dans une surface intérieure de la paroi latérale (15); la paroi latérale (15) ayant une lèvre (22) s'étendant vers l'intérieur, présentant un diamètre intérieur, et la surface annulaire (19) d'étanchéité étant adjacente et vers l'extérieur de ladite lèvre annulaire (22);

(b) un élément à piston (3) conçu pour être monté sur le véhicule et placé dans une disposition espacée de l'extrémité ouverte (17) du moyen à chapeau (2, 50);

(c) une chambre à pression de fluide formée entre le moyen à chapeau (2, 50) et l'élément à piston (3) par un manchon flexible (10) relié de façon étanche, par ses extrémités opposées, au moyen à chapeau (2) et à l'élément à piston (3),

(d) une bague annulaire continue (25) d'étanchéité disposée dans l'extrémité ouverte (17) du moyen à chapeau (2), caractérisé par le fait que ladite bague (25) comporte une paroi latérale cylindrique d'un diamètre extérieur (29) supérieur ou inférieur, respectivement, au diamètre intérieur de la lèvre annulaire (22) avant la mise en place dans l'extrémité ouverte (17) du moyen à chapeau (2, 50) afin d'y être retenue par la lèvre annulaire (22), ladite bague d'étanchéité (25) étant concentrique à la surface annulaire intérieure (19) d'étanchéité en retrait dudit moyen à chapeau (2, 50), une extrémité (26a) du manchon flexible (10) étant disposée entre la bague (25) d'étanchéité et la surface en retrait (19) d'étanchéité et placée dans un état de compression par la bague (25) d'étanchéité pour former un joint globalement étanche à l'air avec ladite bague (25) d'étanchéité et ladite surface annulaire (19) d'étanchéité, ladite bague (25) d'étanchéité étant dans un état non déformé.

2. Ressort pneumatique selon la revendication 1, dans lequel la paroi latérale cylindrique (15) du moyen à chapeau (2, 50) aboutit dans un rebord annulaire (20) s'étendant vers l'extérieur à l'extrémité ouverte (17) dudit moyen à chapeau (2, 50).

3. Ressort pneumatique selon la revendication 2, dans lequel la surface annulaire (19) d'étanchéité est reliée au rebord annulaire par une surface annulaire à courbure douce.

4. Ressort pneumatique selon la revendication 1, dans lequel la surface annulaire (19) d'étanchéité est formée de façon à présenter plusieurs gorges (23).

5. Ressort pneumatique selon la revendication 1, dans lequel ladite première extrémité du manchon flexible (10) est roulée autour de la bague (25) d'étanchéité.

6. Ressort pneumatique selon la revendication 1, dans lequel l'extrémité ouverte du moyen à chapeau (2, 50), définie par le rebord annulaire (20) s'étendant vers l'extérieur, est reliée à la surface annulaire (19) d'étanchéité par la lèvre annulaire (22).

7. Ressort pneumatique (1), le diamètre intérieur de la lèvre annulaire (22) étant plus grand (figures 4–6) que le diamètre extérieur (29) de la bague (25) d'étanchéité comme défini dans la revendication 1, dans lequel la bague (25) d'étanchéité et le moyen à chapeau sont en métal.

8. Ressort pneumatique selon la revendication 7, dans lequel le diamètre extérieur de la bague annulaire (25) d'étanchéité est inférieur au diamètre de la surface annulaire (19) d'étanchéité et forme avec lui un espace annulaire (31), et dans lequel la largeur dudit espace annulaire (31) est inférieure à l'épaisseur du manchon flexible (10).

9. Ressort pneumatique selon la revendication 8, dans lequel la partie du manchon flexible (10) serrée entre la bague (25) d'étanchéité et une surface de serrage est comprimée dans les limites de 30%–60% de son état non comprimé.

10. Ressort pneumatique (1), le diamètre intérieur de la lèvre annulaire (22) étant inférieur (figures 10–12) au diamètre extérieur (29) de la bague (25) d'étanchéité comme défini dans la revendication 1, dans lequel la bague (25) d'étanchéité est en métal et le moyen à chapeau (2, 50) est en matière plastique.

11. Ressort pneumatique selon la revendication 10, dans lequel la paroi latérale (15), sur laquelle est formée la surface annulaire (19) d'étanchéité, est formée en une résine du type Nylon chargée de verre.

12. Ressort pneumatique selon la revendication 11, dans lequel le moyen à chapeau (2, 50) est formé d'une résine du type acétal.

13. Ressort pneumatique selon la revendication 10, dans lequel le diamètre extérieur (29) de la bague (25) d'étanchéité est globalement égal au diamètre de la surface annulaire (19) d'étanchéité du moyen à chapeau (2, 50).

14. Ressort pneumatique selon la revendication 13, dans lequel ladite paroi latérale cylindrique (15) est expansée vers l'extérieur par le manchon flexible serré (10) lorsqu'il est serré entre la bague (25) d'étanchéité et la surface (19) d'étanchéité.

15. Procédé pour le montage étanche d'une extrémité d'un manchon flexible d'un ressort pneumatique (1) selon la revendication 1 dans l'extrémité ouverte (17) d'une paroi globalement cylindrique (15) d'un élément d'extrémité (2, 50) au moyen d'une bague intérieure continue (25) d'étanchéité, comprenant les étapes qui consistent:

(a) à utiliser un élément d'extrémité (2, 50) ayant une paroi globalement cylindrique (15) et une surface annulaire intérieure (19) d'étanchéité en retrait et une lèvre annulaire (22) s'étendant vers l'intérieur, formée sur elle et globalement adjacente à une extrémité ouverte (17) de celle-ci;

(b) à rouler une première extrémité (26) d'un manchon flexible (10) sur une bague annulaire continue (25) d'étanchéité, non contrainte, ayant un diamètre extérieur plus grand ou plus faible, respectivement, qu'un diamètre intérieur de la lèvre annulaire (22);

(c) à insérer l'extrémité roulée (26) du manchon flexible (10) et la bague (25) d'étanchéité au-delà de la lèvre annulaire (22); et

(d) à expanser vers l'extérieur la lèvre annulaire (22) et la paroi cylindrique (15) de l'élément d'extrémité (2, 50) dans leurs limites élastiques à la suite de l'insertion de l'extrémité roulée (26) du manchon flexible (10) et de la bague (25) d'étanchéité au-delà de la lèvre annulaire (22) et dans l'extrémité ouverte (17) dudit élément d'extrémité (2, 50), plaçant une partie du manchon flexible (10) en compression entre la bague (25) d'étanchéité et la surface annulaire (19) d'étanchéité en retrait pour serrer et appliquer de façon étanche le manchon flexible (10) contre l'élément d'extrémité (2, 50) dans l'extrémité ouverte sans déformer la bague (25) d'étanchéité et sans déformer l'élément d'extrémité (2, 50) au-delà de ses limites élastiques, et pour retenir la bague annulaire (25) d'étanchéité dans l'extrémité ouverte (17) par la lèvre annulaire (22).

16. Procédé suivant la revendication 15, dans lequel le manchon flexible (10) est comprimé dans les limites d'une plage de 30%–60% de son état non comprimé.

17. Procédé selon la revendication 16, dans lequel la paroi cylindrique (15) de l'élément d'extrémité (2, 50) est formée d'une matière plastique ou d'un métal, respectivement, et la bague d'étanchéité est formée d'un métal.

18. Procédé selon la revendication 15, dans lequel la paroi cylindrique (15) aboutit dans un rebord annulaire (20) s'étendant vers l'extérieur autour de l'extrémité ouverte de l'élément d'extrémité (2, 50).

19. Procédé selon la revendication 15, dans lequel – lorsque le moyen à chapeau (2, 50) est formé en métal – le diamètre extérieur de la bague (25) d'étanchéité est inférieur au diamètre de la surface annulaire (19) d'étanchéité d'une valeur qui n'est pas supérieure au double de l'épaisseur du manchon flexible (10).

20. Procédé selon la revendication 15, dans lequel – lorsque le moyen à chapeau (2, 50) est formé d'une matière plastique – le diamètre extérieur (29) de la bague (25) d'étanchéité est globalement égal au diamètre de la surface annulaire (19) d'étanchéité du moyen à chapeau (2, 50).

EP 0 264 573 B1

FIG.1

FIG.2

FIG.3

FIG.4

FIG.5

FIG.6

FIG.7

FIG.8

FIG.9

FIG.10

FIG.II

FIG.12